# EUROPEAN PATENT SPECIFICATION

(11) **EP 4 675 916 B1**
(45) Date of publication and mention of the grant of the patent: **01.04.2026**
(21) Application number: 23715615.3
(22) Date of filing: 02.03.2023
(51) Int. Cl.: H02S 10/10

(54) **ENERGY HARVESTING AND PRODUCTION CELL DEVICE IN PHOTOVOLTAIC, PIEZOELECTRIC AND ELECTROMAGNETIC MODE**
ZELLVORRICHTUNG ZUR PHOTOVOLTAISCHEN, PIEZOELEKTRISCHEN UND ELEKTROMAGNETISCHEN ENERGIEGEWINNUNG UND -ERZEUGUNG
DISPOSITIF AVEC CELLULE DE CAPTAGE ET DE PRODUCTION D'ÉNERGIE EN MODE PHOTOVOLTAÏQUE, PIÉZOÉLECTRIQUE ET ÉLECTROMAGNÉTIQUE

(43) Date of publication of application: 07.01.2026
(73) Proprietor: DE MORAIS CARVALHO COELHO, Antonio José, 4420-502 Valbom GDM (PT); Junming, Hu, 4050-275 Porto (PT)
(72) Inventor: DE MORAIS CARVALHO COELHO, Antonio José, 4420-502 Valbom GDM (PT); Junming, Hu, 4050-275 Porto (PT)
(74) Representative: Monteiro Alves, Inês
(86) International application number: PCT/PT2023/050006
(87) International publication number: WO 2024/181879

(56) References cited:
- CN-A- 106 549 625
- CN-A- 109 787 535
- CN-A- 113 054 820

## Description

This is a device which simultaneously combines the photovoltaic, piezoelectric, and electromagnetic technology in energy harvesting and production.

Elaborated specifically to be used in electric motor vehicles, it can be applied in the naval, aeronautic industry, in buildings, traffic lights, etc.

The invention starts from a sandwich type device solution, having variable dimensions which, simultaneously, harvests the solar light producing energy and, at the same time, uses the air flow to create electric energy through the piezoelectric and electromagnetic way.

### Prior Art

Currently there exist technologies and concepts that allow using the solar light through photovoltaic solar panels (devices used to convert the energy of sunlight into electric energy, and which are comprised by solar cells which catch sunlight).

There also exist devices which catch the air flow for producing electric energy through piezoelectric materials (obtained through a difference in the electric potential as from the deformation of specific materials which, by undergoing deformation, generate an electric charge which can be stored and subsequently used).

There are also known from the state of the art electromagnetic materials (wherein the moving magnetic field generates electric current).

Said technologies are already used in the industry in diverse activities.

Document CN 109 787 535 A discloses an energy harvesting device capable of simultaneously collecting dynamic and static energy. The device comprises a dynamic energy collecting part and a static energy collecting part. The two parts are fixedly connected. The static energy collecting part is at least one of a light energy generator and a thermal energy generator; and the dynamic energy collecting part can be one of a friction generator, an electromagnetic generator and a piezoelectric generator.

In a different manner, the technology found in the device presented herein is innovative, representing a non-obvious step from the state of the art, by allowing a device (cell) designed and thought for this purpose, to concentrate obtaining energy simultaneously (or not) produced by the photovoltaic panels through sunlight and by the piezoelectric and electromagnetic materials through the air flow.

Designed for the automobile industry, at a time when we move towards the mandatory revolution relative to the future use of the electric car and the hybrid car, it can also be used in the aeronautical, naval industry, and further, incorporated in the walls and roofs of buildings, residences, traffic lights, etc.

Although it is capable of being used in diverse applications, the invention finds its best mode of application in electric vehicles.

Naturally, despite the innovation being translated into the simultaneous use of the photovoltaic, piezoelectric, and electromagnetic technology, in case the device is placed inside or under the body of a car, it would impair the production of energy by solar mode. However - and since the electric vehicles do not have the bulky combustion engine - the hood zone can be lowered and accommodate the invention which, placed at the front entrance of the air flow, would not limit the visibility of the driver.

As regards the automobile industry, there are already used solar panels to catch solar energy when the same exists. The electric and hybrid automobiles already count on a technology which is known as "regenerative braking system", wherein, each time the engine stops accelerating, the electric engine of the automobile acts as a generator, thus allowing to recharge the batteries by means of the conversion of kinetic braking energy into energy that is capable of being stored in the automobile battery.

However, the energy contained in the batteries is consumed when the vehicle is accelerating, there not existing at this time the technology which allows, during acceleration, a process for obtaining energy and respective storage.

In the invention herein proposed, through the air flow and the sunlight (when this exists) it will be possible, during acceleration, and deceleration (and even with the vehicle stopped whenever there exists an air flow or sunlight), to catch, produce and store electric energy in the batteries.

Depending on the amount of energy which we intend to calculate and obtain, the number of cells which will be used to form a panel (puzzle) is determined, as well as the size of the same, which can be increased or reduced.

Being able to increase or reduce the number and size of the cells, the invention presents the advantage of being able to reduce the size, the weight and, in this manner, the price of the batteries, which is the most expensive component of an electric car.

### Brief Description of the Figures

**Fig.1**

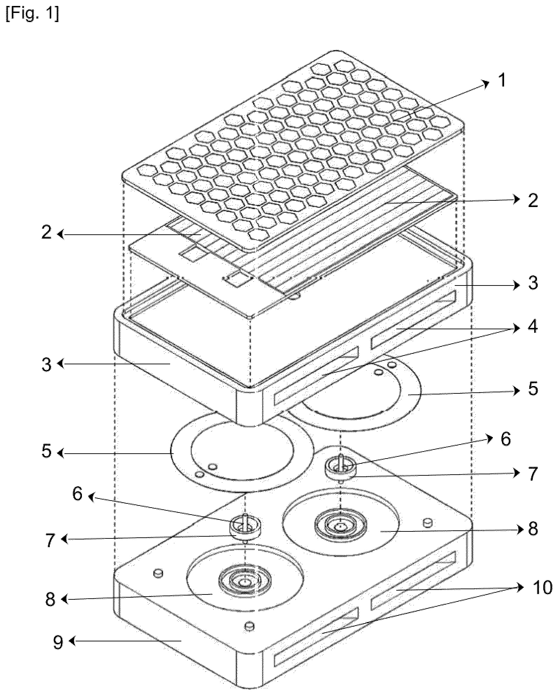

   [Fig.1] shows, in perspective and in detail the components of the invention, viewed from the anterior zone thereof, evidencing the solar plate protective coating (1), the solar plate (2), the upper part of the cell (3), the upper air inlets (4), the piezoelectric plates (5), the coils (6), the magnetic rings (7), the cavity (8), the lower part of the cell (9), and the lower air inlets (10);
**Fig.2**

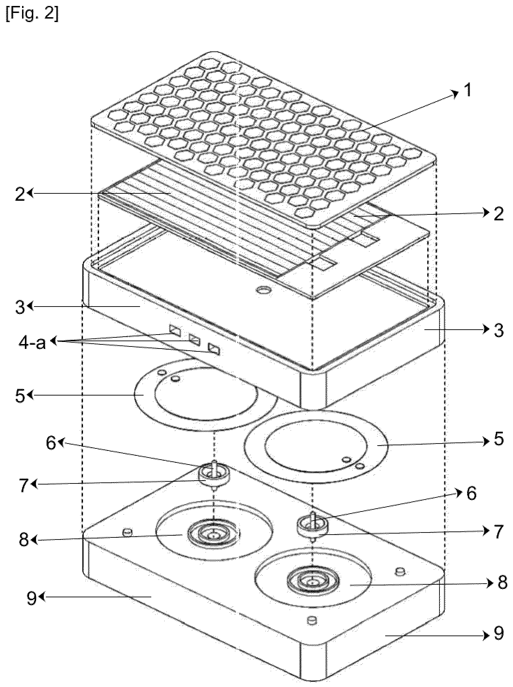

   [Fig.2] shows, in perspective and in detail, the constitutive parts of the device that is the object of the invention viewed from the rear zone thereof, evidencing the solar plate protective coating (1), the solar plate (2), the upper part of the cell (3), the electrical conductor outputs (4-a), the piezoelectric plates (5), the coils (6), the magnetic rings (7), the cavity (8) and the lower part of the cell (9);
**Fig.3**

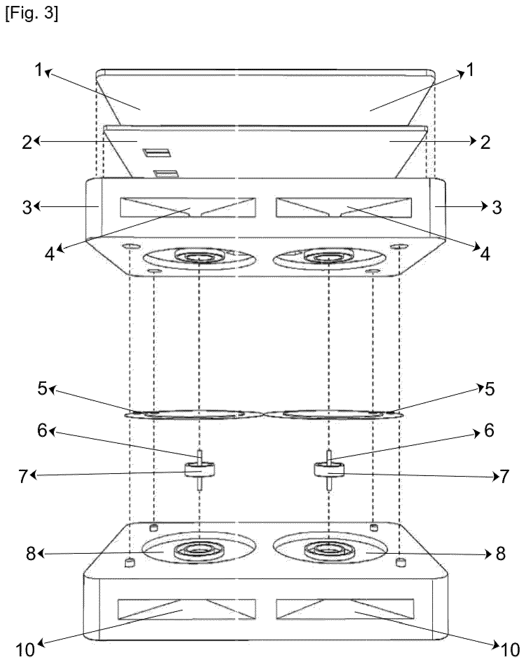

   [Fig.3] represents, in front elevation and in details, the constitutive parts of the device that is the object of the invention, evidencing the solar plate protective coating (1), the solar plate (2), the upper part of the cell (3), the upper air inlets (4), the piezoelectric plates (5), the coils (6), the magnetic rings (7), the cavity (8), the lower part of the cell (9) and the lower air inlets (10);
**Fig.4**

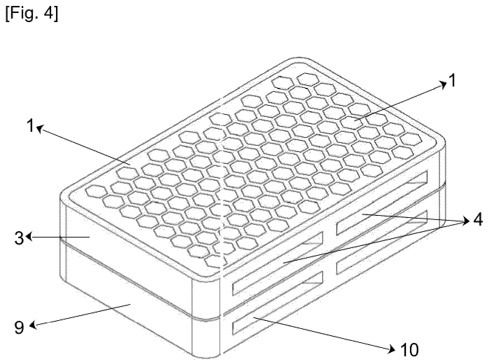

   [Fig.4] shows the exterior of the device that is the object of the invention evidencing the solar plate protective coating (1), the upper part of the cell (3), the upper air inlets (4), the lower part of the cell (9) and the lower air inlets (10).

### Description of Embodiments

The invention combines simultaneously the technology of energy harvesting storage through solar, piezoelectric, and electromagnetic way, the latter with the use of the air flow.

The invention is globally represented in Fig. 1 to Fig. 3, wherein there are represented the components thereof in detail.

Having a general sandwich form (Fig. 4), it is comprised by two parts, the upper cell part (3) and the lower cell part (9).

Both parts - upper and lower - are provided with air inlets in their frontal part. Either the upper air inlets (4) or the lower air inlets (10) have a tapered configuration in the direction of the inner zone of the sandwich to receive more air and proceed with the acceleration (Venturi effect).

Inside the sandwich there exist piezoelectric plates (5) vertically aligned with coils (6) which are located inside the magnetic rings (7). Said magnetic rings (7) and coils (6) are housed in cavities (8).

The energy produced is conducted to the exterior of the sandwich by the rear part thereof, through the outlets of the electrical conductors (4-a).

A solar plate (2) is placed over the upper part of the cell (3) protected by a solar plate protective coating (1).

The dimensions of the sandwich are adaptable to the intended purpose: greater energy production by solar mode leads to the use of a plate with higher number of cells.

### Description of the working of the invention

In each one of the parts of the sandwich - upper part of the cell (3) and lower part of the cell (9) there exist air inlets in the front part. The function of said inlets is to channel and accelerate the air, allowing the deformation of the piezoelectric materials through the air flow that penetrates through same.

Inside each one of the parts of the sandwich - upper and lower - there exist two cavities (8) wherein there are inserted, in each one, a lead zirconate titanate disc (PZT) or other equivalent piezoelectric material, in the form of piezoelectric plates (5).

In the central part of each cavity (8) there is inserted a magnetic ring (7).

Each magnetic ring is provided with a coil (6). The air flow deforms the piezoelectric materials which, in turn, induce movement to the coil (6).

The coil (6), inserted in the inner hole of the magnetic rings (7), runs through this channel in a back-and-forth electromagnetic induction motion simultaneously with the deformation of the piezoelectric discs - piezoelectric plates (5) - producing energy, which will potentiate that which was produced by the deformation of the piezoelectric materials.

On the surface of the upper part of the cell (3) there is inserted a solar plate (2) which can resort to several compositions (indicatively, polycrystalline silicon, crystalline silicon, or others).

The total energy harvested and produced by each cell can be directed directly to the central battery of the vehicle, or it can be stored in a second equipment (reserve battery or for extra autonomy).

The device can be miniatured or increased according to the intended energy parameters.

## Claims

1. A device with harvest cell and simultaneous production of photovoltaic, piezoelectric, and electromagnetic energy, having a sandwich configuration in two parts, an upper and a lower one, wherein the upper part of the cell (3) and the lower part of the cell (9) have air inlets and, the interior of the device being comprised by piezoelectric plates (5) vertically aligned with coils (6) which are located inside magnetic rings (7), said magnetic rings (7) and coils (6) being housed in cavities (8), and by further comprising electrical conductor outlets (4-a), and
further comprising a solar plate (2) protected by a solar plate protective coating (1) placed over the upper part of the cell (3), wherein the solar plate (2) protected by a solar plate protective coating (1) is configured to produce photovoltaic energy, and wherein
the upper part of the cell (3) is provided with upper air inlets (4), and the lower part of the cell (9) is provided with lower air inlets (10), and wherein
two cavities (8) are comprised inside the upper part of the cell (3) and two cavities (8) are comprised inside the lower part of the cell (9), and wherein one piezoelectric plate (5) is inserted into each one of the two recesses formed by the superposed cavities (8) of the upper part of the cell (3) and of the lower part of the cell (9), and wherein
the upper air inlets (4) and the lower air inlets (10) are configured to channel and accelerate the air, allowing the deformation of the piezoelectric plates (5) through the air flow that penetrates through the piezoelectric plates (5), and
wherein
the piezoelectric plates (5), when deformed, are configured to induce movement to the coils (6), and wherein
the coils (6), inserted in inner channels of the magnetic rings (7), are configured to run through these channels in a back-and-forth electromagnetic induction motion simultaneously with the deformation of the piezoelectric plates (5) producing energy, and wherein
the energy produced is directed to the electrical conductor outlets (4-a).

2. The device with harvest cell and simultaneous production of photovoltaic, piezoelectric, and electromagnetic energy, according to the previous claim, **characterized by**, either the upper air inlets (4) or the lower air inlets (10) presenting a tapered configuration in the direction of the interior of the device.

3. A working process of the device with harvest cell and simultaneous production of photovoltaic, piezoelectric, and electromagnetic energy as defined in any one of the previous claims, **characterized by** presenting as working steps thereof:
a) entry of air flow through the upper air inlets (4) and lower air inlets (10),
b) deformation of the piezoelectric plates (5) in the form of discs by the air flow, originating more energy,
c) simultaneously, the displacement of the coils (6), by the effect of the deformation of the piezoelectric plates (5), in the inner channel of the magnetic rings (7) in a back-and-forth electromagnetic induction movement, producing energy,
d) simultaneous production of photovoltaic energy, produced from a solar plate (2) inserted in the upper part of the cell (3), and
e) direction of the energy produced and stored through the electrical conductor outlets (4-a) to a battery.

## Patentansprüche

1. Vorrichtung mit Energiegewinnungszelle und gleichzeitiger Erzeugung von photovoltaischer, piezoelektrischer, und elektromagnetischer Energie, aufweisend eine Sandwichkonfiguration in zwei Teilen, einem oberen und einem unteren, wobei der obere Teil der Zelle (3) und der untere Teil der Zelle (9) Lufteinlässe aufweisen und das Innere der Vorrichtung piezoelektrische Platten (5) umfasst, die vertikal mit Spulen (6) ausgerichtet sind, die innerhalb von Magnetringen (7) angeordnet sind, wobei die Magnetringe (7) und die Spulen (6) in Hohlräumen (8) untergebracht sind, und ferner Stromleiterausgänge (4-a) umfasst, und ferner umfassend eine Solarplatte (2), die durch eine Solarplattenschutzbeschichtung (1) geschützt ist, die über dem oberen Teil der Zelle (3) platziert ist, wobei die durch eine Solarplattenschutzbeschichtung (1) geschützte Solarplatte (2) dazu ausgelegt ist, photovoltaische Energie zu erzeugen, und wobei
der obere Teil der Zelle (3) mit oberen Lufteinlässen (4) versehen ist und der untere Teil der Zelle (9) mit unteren Lufteinlässen (10) versehen ist, und wobei
zwei Hohlräume (8) innerhalb des oberen Teils der Zelle (3) umfasst sind und zwei Hohlräume (8) innerhalb des unteren Teils der Zelle (9) umfasst sind, und wobei eine piezoelektrische Platte (5) in jede der beiden Ausnehmungen eingefügt ist, die durch die übereinanderliegenden Hohlräume (8) des oberen Teils der Zelle (3) und des unteren Teils der Zelle (9) ausgebildet sind, und wobei
die oberen Lufteinlässe (4) und die unteren Lufteinlässe (10) dazu ausgelegt sind, die Luft zu kanalisieren und zu beschleunigen, wodurch die Verformung der piezoelektrischen Platten (5) durch den Luftstrom ermöglicht wird, der durch die piezoelektrischen Platten (5) durchdringt, und wobei
die piezoelektrischen Platten (5), wenn sie verformt sind, dazu ausgelegt sind, Bewegung der Spulen (6) zu bewirken, und wobei
die Spulen (6), die in innere Kanäle der Magnetringe (7) eingefügt sind, dazu ausgelegt sind, in einer hin- und hergehenden elektromagnetischen Induktionsbewegung durch diese Kanäle zu verlaufen, wobei gleichzeitig mit der Verformung der piezoelektrischen Platten (5) Energie erzeugt wird, und wobei
die erzeugte Energie zu den Stromleiterausgängen (4-a) geleitet wird.

2. Vorrichtung mit Energiegewinnungszelle und gleichzeitiger Erzeugung von photovoltaischer, piezoelektrischer und elektromagnetischer Energie nach dem vorhergehenden Anspruch, **dadurch gekennzeichnet, dass** entweder die oberen Lufteinlässe (4) oder die unteren Lufteinlässe (10) eine konisch zulaufende Konfiguration in Richtung des Inneren der Vorrichtung aufweisen.

3. Arbeitsprozess der Vorrichtung mit Energiegewinnungszelle und gleichzeitiger Erzeugung von photovoltaischer, piezoelektrischer und elektromagnetischer Energie nach einem der vorhergehenden Ansprüche, **dadurch gekennzeichnet, dass** er als Arbeitsschritte davon Folgendes aufweist:
a) Eintreten eines Luftstroms durch die oberen Lufteinlässe (4) und die unteren Lufteinlässe (10),
b) Verformen der piezoelektrischen Platten (5) in Form von Scheiben durch den Luftstrom, wodurch mehr Energie entsteht,
c) gleichzeitiges Verschieben der Spulen (6) durch die Wirkung der Verformung der piezoelektrischen Platten (5) im inneren Kanal der Magnetringe (7) in einer hin- und hergehenden elektromagnetischen Induktionsbewegung, wodurch Energie erzeugt wird,
d) gleichzeitiges Erzeugen von photovoltaischer Energie, die von einer Solarplatte (2) erzeugt wird, die in den oberen Teil der Zelle (3) eingefügt ist, und
e) Leiten der erzeugten und gespeicherten Energie durch die Stromleiterausgänge (4-a) zu einer Batterie.

## Revendications

1. Dispositif à cellule de récupération d'énergie et à production simultanée d'énergie photovoltaïque, piézoélectrique et électromagnétique, présentant une configuration en sandwich en deux parties, l'une supérieure et l'autre inférieure, la partie supérieure de la cellule (3) et la partie inférieure de la cellule (9) présentant des entrées d'air et l'intérieur du dispositif étant constitué par des plaques piézoélectriques (5) alignées verticalement avec des bobines (6) situées à l'intérieur d'anneaux magnétiques (7), lesdits anneaux magnétiques (7) et bobines (6) étant logés dans des cavités (8), et comprenant en outre des sorties de conducteurs électriques (4-a), et
comprenant en outre une plaque solaire (2) protégée par un revêtement protecteur de plaque solaire (1) placée sur la partie supérieure de la cellule (3), la plaque solaire (2) protégée par un revêtement protecteur de plaque solaire (1) étant configurée pour produire de l'énergie photovoltaïque, et
la partie supérieure de la cellule (3) étant pourvue d'entrées d'air supérieures (4), et la partie inférieure de la cellule (9) étant pourvue d'entrées d'air inférieures (10), et
deux cavités (8) étant comprises à l'intérieur de la partie supérieure de la cellule (3) et deux cavités (8) étant comprises à l'intérieur de la partie inférieure de la cellule (9), et une plaque piézoélectrique (5) étant insérée dans chacune des deux alvéoles formées par les cavités (8) superposées de la partie supérieure de la cellule (3) et de la partie inférieure de la cellule (9), et les entrées d'air supérieures (4) et les entrées d'air inférieures (10) étant configurées pour canaliser et accélérer l'air, en permettant la déformation des plaques piézoélectriques (5) par le flux d'air pénétrant au travers des plaques piézoélectriques (5), et
les plaques piézoélectriques (5), lorsqu'elles sont déformées, étant configurées pour imprimer un mouvement aux bobines (6), et
les bobines (6), insérées dans des canaux intérieurs des anneaux magnétiques (7), étant configurées pour se déplacer à travers ces canaux selon un mouvement de va-et-vient par induction électromagnétique simultanément à la déformation des plaques piézoélectriques (5), en produisant de l'énergie, et
l'énergie produite étant guidée vers les sorties de conducteurs électriques (4-a).

2. Dispositif à cellule de récupération d'énergie et à production simultanée d'énergie photovoltaïque, piézoélectrique et électromagnétique selon la revendication précédente, **caractérisé en ce que** soit les entrées d'air supérieures (4) soit les entrées d'air inférieures (10) présentent une configuration à rétrécissement progressif en direction de l'intérieur du dispositif.

3. Procédé de fonctionnement du dispositif à cellule de récupération d'énergie et à production simultanée d'énergie photovoltaïque, piézoélectrique et électromagnétique selon l'une quelconque des revendications précédentes, **caractérisé en ce qu'**il présente, comme étapes de fonctionnement :
a) l'admission d'un flux d'air à travers les entrées d'air supérieures (4) et entrées d'air inférieures (10),
b) la déformation des plaques piézoélectriques (5) sous forme de disques par le flux d'air, générant davantage d'énergie,
c) simultanément, le déplacement des bobines (6), sous l'effet de la déformation des plaques piézoélectriques (5), dans le canal intérieur des anneaux magnétiques (7) selon un mouvement de va-et-vient par induction électromagnétique, en produisant de l'énergie,
d) la production simultanée d'énergie photovoltaïque, produite à partir d'une plaque solaire (2) insérée dans la partie supérieure de la cellule (3), et
e) le guidage de l'énergie produite et emmagasinée à travers les sorties de conducteurs électriques (4-a) vers une batterie.
